# EUROPEAN PATENT APPLICATION

(11) **EP 4 550 447 A1**
(43) Date of publication of application: **07.05.2025**
(21) Application number: 24197166.2
(22) Date of filing: 29.08.2024
(51) Int. Cl.: H01M 4/131, H01M 4/36, H01M 4/485, H01M 4/525, H01M 4/58, H01M 4/62, H01M 10/054, H01M 4/02

(54) **POSITIVE ELECTRODE ACTIVE MATERIAL FOR SODIUM SECONDARY BATTERY, METHOD OF PREPARING THE SAME, AND SODIUM SECONDARY BATTERY INCLUDING THE SAME**

(30) Priority: 31.10.2023 KR 20230147305
(71) Applicant: ECOPRO BM CO., LTD., Cheongju-si, Chungcheongbuk-do 28117 (KR)
(72) Inventor: KIM, Da Mo A, 28116 Cheongju-si, Chungcheongbuk-do (KR); LEE, Dongwook, 28116 Cheongju-si, Chungcheongbuk-do (KR); LEE, Myeong Joo, 28116 Cheongju-si, Chungcheongbuk-do (KR)
(74) Representative: Beck & Rössig European Patent Attorneys

(57) **Abstract**

The present invention provides a positive electrode active material for a sodium secondary battery, including layered oxide particles containing at least sodium and a transition metal, and a coating layer located on the layered oxide particles, wherein the coating layer includes at least two compounds selected from compounds having crystal structures belonging to space groups P421c, Fd-3m, and Pnma, respectively.

## Description

### BACKGROUND

### 1. Field of the Invention

The present invention relates to a positive electrode active material for a sodium secondary battery, a method of preparing the same, and a sodium secondary battery including the same.

### 2. Discussion of Related Art

Lithium-ion secondary batteries have been widely used as energy storage devices in various electronic technology fields. Recently, as the demand for lithium-ion secondary batteries has rapidly increased, sodium-ion secondary batteries are attracting attention to replace lithium, an expensive metal.

Sodium-ion secondary batteries are one of the next-generation materials with high potential for application to secondary batteries because they have a similar intercalating/deintercalating reaction operating principle as lithium-ion secondary batteries. However, sodium-ion secondary batteries have difficulties in commercialization because they show lower performance in capacity, lifespan characteristics, and rate characteristics compared to lithium-ion secondary batteries, and the development of a positive electrode active material with high performance is essential in order to commercialize sodium-ion secondary batteries.

The positive electrode active material for sodium-ion secondary batteries is typically a layered transition metal oxide that has a simple structure, excellent electrochemical performance, and is easy to synthesize. Layered transition metal oxides are typically divided into O3-types and P2-types depending on their crystal structure, and the positive electrode active material based on the O3-type structure has a composition such as Naₓ(TM)O₂ (2/3 < x ≤ 1), and the positive electrode active material based on the P2-type structure has the composition Naₓ(TM)O₂ (x≤ 2/3).

In general, O3-type layered oxides have a higher energy density than P2-type layered oxide particles, but have the disadvantage of reducing cycle stability due to greater structural changes during the charge/discharge process, and P2-type layered oxides have relatively excellent cycle stability, but have disadvantages such as relatively low energy density due to low sodium content, making commercial application difficult.

However, O3-type oxide particles have problems such as reduced battery life and stability caused by gas generation due to electrolyte side reactions during battery operation due to sodium by-products present in the form of Na₂CO₃ and NaOH on the particle surface, and a decrease in the capacity and output of the positive electrode active material. When O3-type oxide particles are washed with water to remove residual Na, all internal Na comes out and the crystal structure collapses, making them unusable, which hinders their commercialization.

The present invention aims to improve the structural stability of O3-type positive electrode active materials to achieve high capacity and excellent lifespan characteristics.

### SUMMARY OF THE INVENTION

The present invention is directed to providing a positive electrode active material in which a coating layer is formed through re-reaction between residual Na on the surface of the positive electrode active material and a coating material, and a method of preparing the same.

The present invention is also directed to suppressing electrolyte side reactions during battery operation and improving electrochemical properties by forming a coating layer including at least two space groups, two crystal structures, or two compounds on the surface of a positive electrode active material.

One embodiment of the present invention provides a positive electrode active material for a sodium secondary battery, including:
layered oxide particles containing at least sodium and a transition metal; and
a coating layer located on the layered oxide particles,
wherein the coating layer includes at least two compounds selected from compounds having crystal structures belonging to space groups P421c, Fd-3m, and Pnma, respectively.

The coating layer may include at least three compounds having crystal structures belonging to P421c, Fd-3m, and Pnma, respectively

The compound having a crystal structure belonging to the space groups P421c, Fd-3m, or Pnma may have a tetragonal, cubic, or orthorhombic crystal structure, respectively.

The coating layer may include at least two selected from the group consisting of sodium phosphate, a transition metal oxide, and a transition metal-containing sodium phosphate.

The sodium phosphate, transition metal oxide, and transition metal-containing sodium phosphate may be represented by the following Chemical Formulas 2a, 2b, and 2c, respectively.

[Chemical Formula 2a] NaₓPO_{y}

In Chemical Formula 2a, 0<x<4 and 2<y<5

[Chemical Formula 2b] CoₓO_{y}

In Chemical Formula 2b, 0<x<4 and 0<y<5

[Chemical Formula 2c] NaₓCo_{y}PO₄

In Chemical Formula 2c, 0<x<2 and 0<y<2.

The coating layer may include at least Na₃PO₄, Co₃O₄, and NaCoPO₄.

The total compounds included in the coating layer may be included in an amount of more than 0.5 wt% and less than 10 wt% based on the total compounds included in the positive electrode active material.

The layered oxide may be represented by the following Chemical Formula 1.

[Chemical Formula 1] NaₐNiₓTM_{y}M1_{z}Mn_{1-x-y-z}O₂

In Chemical Formula 1, TM is Co or Fe, M1 is at least one selected from P, Sr, Ba, Ti, Zr, Al, W, Co, Fe, Ce, Hf, Ta, Cr, F, Mg, Cr, V, Zn, Si, Y, Ga, Sn, Mo, Ge, Nd, B, Nb, Gd, and Cu, TM and M1 are different elements, and 0.80<a<1.2, 0.01≤x≤0.45, 0.01≤y≤0.45, 0≤z≤0.1, and 0.01≤1-x-y-z≤0.45.

The positive electrode active material may have a BET specific surface area of less than 1 m²/g.

The positive electrode active material may have a residual Na content (TTS, total sodium) of less than 10,000 ppm.

Another embodiment of the present invention provides a method of preparing a positive electrode active material for a sodium secondary battery, including:
a process of mixing a layered oxide containing at least sodium and a transition metal; and a coating source containing a transition metal, phosphorus (P), and oxygen (O); and
a process of sintering the mixture of the layered oxide and the coating source.

In the mixing process, the coating source may be mixed in an amount of more than 0.5 wt% and less than 10 wt% based on the entire mixture.

The coating source may include at least one selected from Co₃(PO₄)₂, CoPO₄, Co₂PO₄, Co₄PO₄, and NH₄H₂PO₄.

The sintering process may be performed at 300 to 550 °C for 2 to 6 hours.

The method may further include a process of washing the sintered product produced in the sintering process with water.

Still another embodiment of the present invention provides a positive electrode for a sodium secondary battery, including the positive electrode active material, and a sodium secondary battery using the positive electrode.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

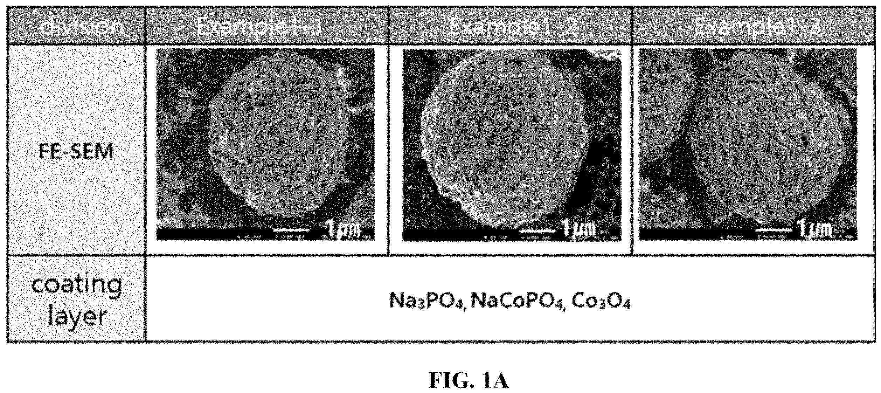

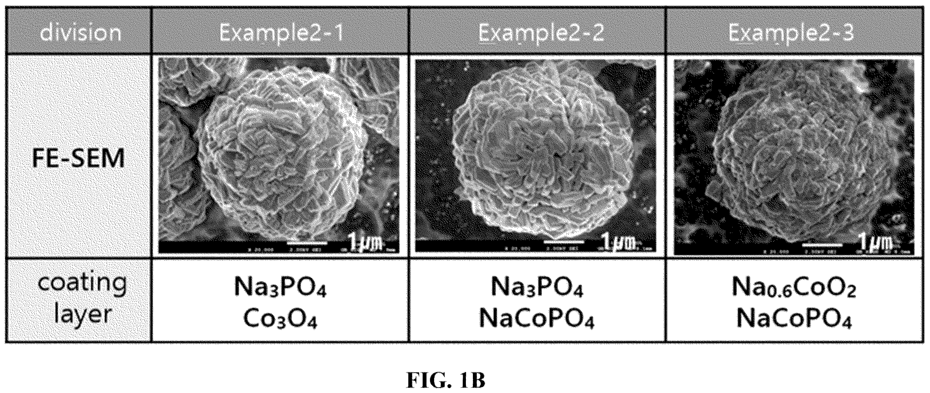

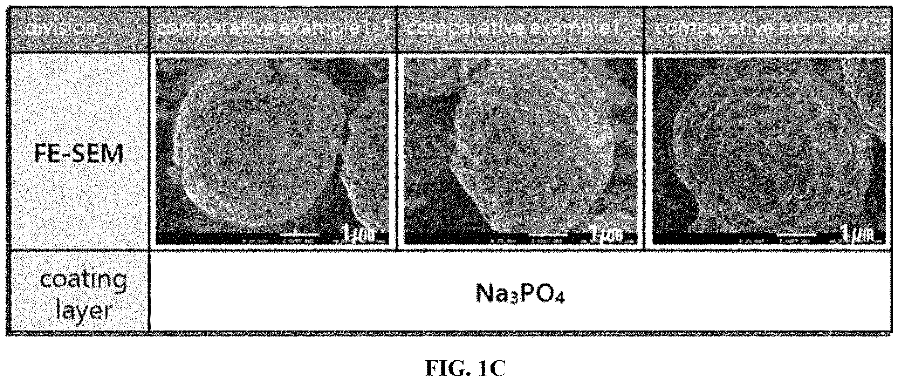

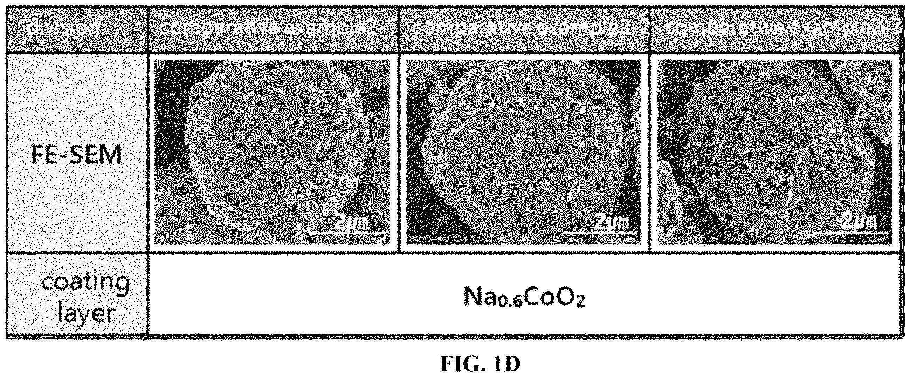

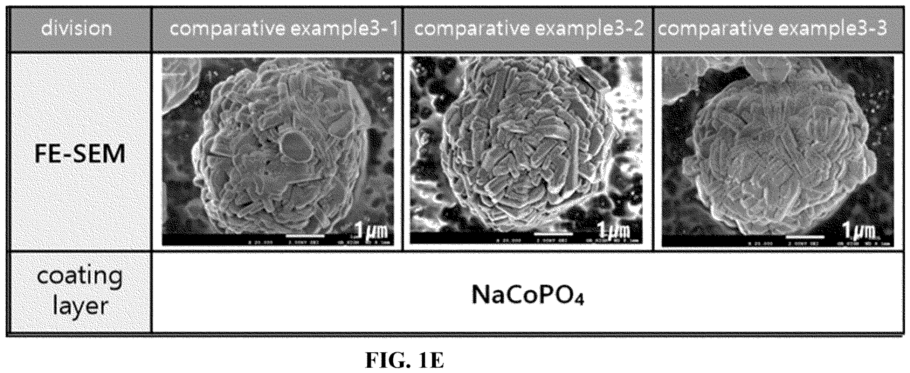

FIGS. 1A to 1E are field emission-scanning electron microscope (FE-SEM) images of the surface of the coating layer-formed positive electrode active material particles prepared in Examples 1-1 to 2-3 and Comparative Examples 1-1 to 3-3, respectively.

### DETAILED DESCRIPTION OF EXEMPLARY EMBODIMENTS

Advantages and features of the present invention and methods of achieving the same should become clear from embodiments described in detail below with reference to the accompanying drawings. However, the present invention is not limited to the embodiments disclosed below, but may be embodied in various different forms, the embodiments merely serve to complete the disclosure of the present invention and to fully inform the scope of the invention to those skilled in the art to which the invention pertains, and the present invention is defined only by the scope of the claims.

Unless otherwise defined, all terms (including technical and scientific terms) used in the present specification may be used with meanings commonly understood by those of ordinary skill in the art to which the present invention belongs. Throughout the specification, when a part is said to "include" a component, this means that the part may further include other components rather than excluding other components unless specifically stated to the contrary. A singular expression also includes a plural expression unless the context clearly indicates otherwise.

One embodiment of the present invention provides a positive electrode active material for a sodium secondary battery. The positive electrode active material includes layered oxide particles containing at least sodium and a transition metal; and a coating layer located on the layered oxide particles.

By re-reacting the residual Na on the surface of the positive electrode active material with the coating material to form a coating layer, the amount of residual Na may be reduced and at the same time, electrolyte side reactions occurring on the particle surface may be suppressed.

The coating layer is characterized in that it includes at least two compounds selected from compounds having crystal structures belonging to space groups P421c, Fd-3m and Pnma, respectively, and may more preferably include at least three compounds with crystal structures belonging to space groups P421c, Fd-3m and Pnma, respectively. Here, the compound may have a crystal structure belonging to the space groups P421c, Fd-3m, or Pnma may have a tetragonal, cubic, or orthorhombic crystal structure and may be sodium phosphate, a transition metal oxide or a transition metal-containing sodium phosphate, specifically Na₃PO₄, Co₃O₄, or NaCoPO₄.

When coating the surface of the positive electrode active material with a compound having a space group P421c and a tetragonal crystal structure, the ionic conductivity of the coating layer increases, which has the advantage of improving the initial charge capacity, but as the thickness of the coating layer increases, the coating layer is formed unevenly, which may result in increased resistance, decreased discharge capacity, and ineffectiveness in improving the lifespan.

When coating the surface of the positive electrode active material with a compound having a space group Fd-3m and a cubic crystal structure or a space group P63/mmc and a hexagonal crystal structure, there is a problem that the initial discharge capacity is reduced due to the formation of an irreversible coating layer or a very low expressed capacity, but the surface coating layer of the positive electrode active material reduces side reactions with the electrolyte and an effect of slightly improving lifespan may be expressed.

When coating the surface of the positive electrode active material with a compound having a space group Pnma and an orthorhombic crystal structure, there are problems in that the concentration of the coating layer increases, resistance increases, and discharge capacity decreases, but an effect of slightly improving lifespan may be expressed.

In the present invention, by including at least two or preferably at least three compounds selected from compounds having crystal structures belonging to space groups P421c, Fd-3m and Pnma, respectively, in the coating layer, the combined effect increases the ionic conductivity of the coating layer to increase Na+ conductivity, improves irreversible coating layer resistance, and increases coating layer concentration and improves coating uniformity to reduce resistance and suppress electrolyte side reactions at the interface, and accordingly, battery performance such as initial capacity expression and lifespan characteristics may be improved.

The coating layer may include at least two compounds selected from the group consisting of sodium phosphate, a transition metal oxide, and a transition metal-containing sodium phosphate, and preferably include all three compounds.

The above compounds are coatings formed by reacting with residual Na on the surface of the positive electrode active material, and may be formed on the surface to suppress electrolyte side reactions and at the same time reduce the amount of residual Na. In addition, the present invention may improve the ionic conductivity of the coating layer, improve coating uniformity when the coating layer thickness increases, suppress the increase in resistance due to the coating layer, and reduce side reactions with electrolyte on the particle surface, by including at least two of the above compounds in the coating layer.

Meanwhile, the sodium phosphate may be a compound having a crystal structure belonging to the space group P421c, the transition metal oxide may be a compound having a crystal structure belonging to the space group Fd-3m, and the transition metal-containing sodium phosphate may be a compound having a crystal structure belonging to the space group Pnma.

The sodium phosphate, transition metal oxide, and transition metal-containing sodium phosphate may be represented by the following Chemical Formulas 2a, 2b, and 2c, respectively:

[Chemical Formula 2a] NaₓPO_{y}

In Chemical Formula 2a, 0<x<4, 2<y<5, for example, 1<x<4 or 2<x<4, 2<y<5 or 3<y<5

[Chemical Formula 2b] CoₓO_{y}

In Chemical Formula 2b, 0<x<4, 0<y<5, for example, 1<x<4 or 2<x<4, 2<y<5 or 3<y<5

[Chemical Formula 2c] NaₓCo_{y}PO₄

In Chemical Formula 2c, 0<x<2, 0<y<2, for example 0.5<x<1.2, 0.67<x<1.2 or 0.8≤x≤1, 0.5<y<1.5 or 0.9<y<1.1.

The sodium phosphate represented by Chemical Formula 2a may include Na₃PO₄, the transition metal oxide represented by Chemical Formula 2b may include Co₃O₄, and the transition metal-containing sodium phosphate represented by Chemical Formula 2c may include NaCoPO₄.

The coating layer preferably may include at least two compounds selected from the group consisting of Na₃PO₄, Co₃O₄, and NaCoPO₄, and preferably may include at least three compounds. Accordingly, the above-described effect can be further improved.

The total compounds included in the coating layer may be included in an amount of more than 0.5 wt% and less than 10%, for example 1 to 8 wt%, 1 to 7 wt%, 1 to 6.5 wt%, or 1 to 6 wt%, based on the total compounds included in the positive electrode active material.

When the content of the coating layer is 10 wt% or more, resistance may increase and capacity characteristics may deteriorate due to increased thickness, and conversely, when the coating layer content is 1 wt% or less, the BET specific surface area increases due to the formation of a non-uniform coating layer, there is no effect of improving electrolyte side reactions, and it may be difficult to sufficiently remove residual Na.

Sodium phosphate included in the coating layer may be included in an amount of more than 0.5 wt% and less than 5 wt%, for example 1 to 5 wt%, 1 to 4.5 wt%, 2 to 4.5 wt%, 3 to 4.5 wt%, 3.5 to 4.5 wt%, or 3.7 to 4.1 wt%, based on the total compounds included in the positive electrode active material. When the content range is below the upper limit, the coating layer may be formed uniformly and the increase in resistance and decrease in discharge capacity may be suppressed, and conversely, when the content range exceeds the lower limit, the ionic conductivity of the coating layer increases and thus the initial charge capacity may be improved.

The transition metal oxide included in the coating layer may be included in an amount of more than 0.01 wt% and more than 1.5 wt%, for example 0.05 to 1.5 wt%, 0.05 to 1.3 wt%, 0.05 to 1.0 wt%, 0.1 to 0.9 wt%, or 0.3 to 0.7 wt%, based on the total compounds included in the positive electrode active material. When the content range is below the upper limit, side reactions with electrolyte are reduced and lifespan is slightly improved, and conversely, when the content range exceeds the lower limit, a decrease in initial discharge capacity may be suppressed.

The transition metal-containing sodium phosphate included in the coating layer may be included in an amount of more than 0.1 wt% and less than 2 wt%, for example 0.1 to 1.5 wt%, 0.3 to 1.5 wt%, 0.5 to 1.5 wt%, 0.7 to 1.5, or 0.9 to 1.3 wt%, based on the total compounds included in the positive electrode active material. When the content range is below the upper limit, the problem of increasing the concentration of the coating layer, increasing the resistance, and decreasing the discharge capacity may be improved, and conversely, when the content range exceeds the lower limit, lifespan may be slightly improved.

The coating layer may include sodium phosphate, a transition metal-containing sodium phosphate, and a transition metal oxide in order of increasing content.

The layered oxide may be represented by the following Chemical Formula 1.

[Chemical Formula 1] NaₐNiₓTM_{y}M1_{z}Mn_{1-x-y-z}O₂

In Chemical Formula 1, TM may be Co or Fe, M1 may be at least one selected from P, Sr, Ba, Ti, Zr, Al, W, Co, Ce, Hf, Ta, Cr, F, Mg, Cr, V, Fe, Zn, Si, Y, Ga, Sn, Mo, Ge, Nd, B, Nb, Gd, and Cu, TM and M1 may be different elements, and 0.80<a<1.2, 0.01≤x≤0.45, 0.01≤y≤0.45, 0≤z≤0.1, and 0.01≤1-x-y-z≤0.45.

The TM may preferably be a ternary transition metal consisting of Ni, Mn, and Fe, specifically it may be a Ni-Fe-Mn 111 layered oxide, and 0.9<a<1.1, 0.3≤x≤0.35, 0.3≤y≤0.35, 0.01<z<0.05, 0.3≤1-x-y-z≤0.35.

The layered oxide may have an O3-type crystal structure. The O3-type layered oxide has a higher energy density than P2-type layered oxide particles, but has poor air stability and water stability. In the present invention, since the water washing-drying process can be eliminated by forming a coating layer through re-reaction between residual Na on the surface of the positive electrode active material and the coating material, the problem of the crystal structure collapsing during water washing to remove residual Na may be improved.

The positive electrode active material may have a BET specific surface area reduced to less than 1 m²/g, for example, 0.1 to 0.8 m²/g or 0.1 to 0.6 m²/g. In the present invention, by including at least two, preferably three compounds in the coating layer, even when the thickness of the coating layer increases, a relatively uniform and smooth coating layer may be formed on the particle surface, and the BET specific surface area may be controlled within the above design range, thereby suppressing interfacial electrolyte side reactions.

The positive electrode active material may have a residual Na content (TTS, total sodium) of less than 10,000 ppm, for example, less than 9,000 ppm, less than 8,000 ppm, less than 7,000 ppm, or less than 6,000 ppm.

Accordingly, gas generation caused by residual Na may be suppressed, and battery life characteristics may be significantly improved.

Meanwhile, the content of the residual Na (TTS, total sodium) may be a value obtained by separately calculating the total amount of only Na among compounds including residual Na (for example, NaOH or Na₂CO₃).

Another embodiment of the present invention provides a method of preparing a positive electrode active material for a sodium secondary battery.

The preparation method includes:
a process of mixing a layered oxide containing at least sodium and a transition metal; and a coating source containing a transition metal, phosphorus (P), and oxygen (O), and
a process of sintering the mixture of the layered oxide and the coating source.

In the mixing process, the coating source can be uniformly mixed on the surface and inside of the layered oxide particles by applying a dry mixing method, and the subsequent washing-drying process may be eliminated, thereby simplifying the process. In addition, in the case of the wet method, the selection of coating compounds is limited and there is a problem of increased costs due to process complexity, which may be undesirable.

The coating source may be mixed in an amount of more than 0.5 wt% and less than 10 wt%, for example 0.5 to 7 wt%, 0.5 to 6 wt%, 1 to 6 wt%, 3 to 6 wt%, or 4 to 6 wt%, based on the entire mixture.

The coating source is a compound capable of forming a coating material that reacts with residual Na, and is a compound containing a transition metal, phosphorus (P) and oxygen (O), and may include, for example, a phosphorus oxide of cobalt. The coating source may specifically include at least one selected from Co₃(PO₄)₂, CoPO₄, Co₂PO₄, Co₄PO₄, and NH₄H₂PO₄, preferably Co₃(PO₄)₂ or NH₄H₂PO₄, and more preferably may be Co₃(PO₄)₂. Accordingly, a coating layer that has reacted with residual Na is formed on the surface to suppress electrolyte side reactions and at the same time reduce the amount of residual Na.

The sintering process is for forming a coating layer through a re-reaction between residual Na on the surface of the layered oxide and the coating source, and is a process of sintering the mixture of the layered oxide and the coating source.

The sintering process may be performed at a temperature of 300 to 550 °C for 2 to 6 hours. Specifically, the sintering may be performed at a temperature of 300 to 500 °C or 350 to 450 °C, and may be performed for 2 to 6 hours, 3 to 5 hours, or 3.5 to 4.5 hours. Accordingly, the ratio of the three compounds in the coating layer may be optimized by referring to Reaction Schemes 1 to 4 below.

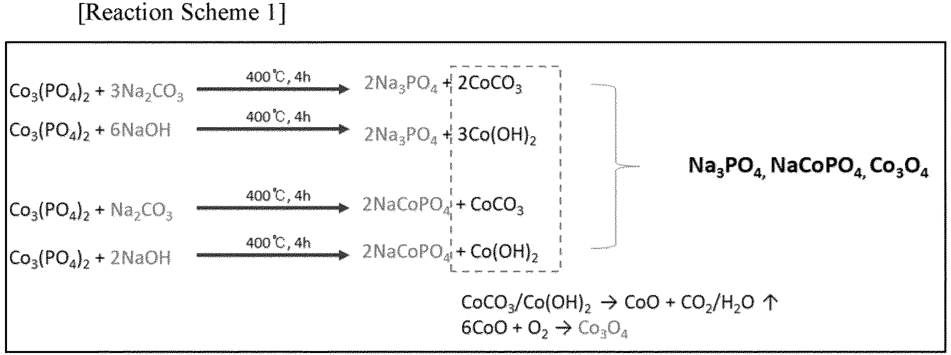

In Reaction Scheme 1, the coating layer may be formed by synthesizing sodium phosphate, transition metal oxide, and transition metal-containing sodium phosphate compound by performing the sintering at the designed reaction temperature and reaction time.

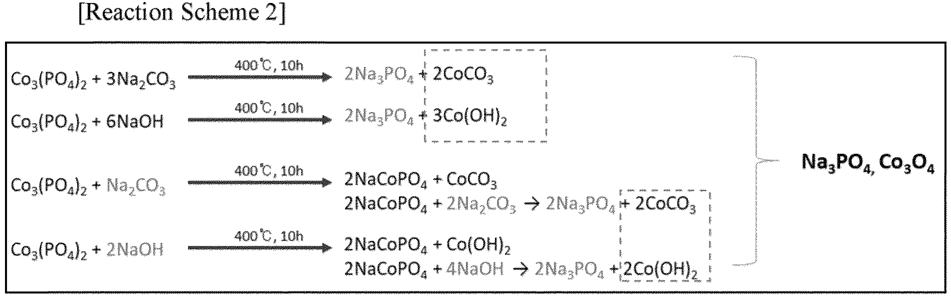

In Reaction Scheme 2, Na₃PO₄ and Co₃O₄ may be favorably produced when the reaction time is somewhat excessive.

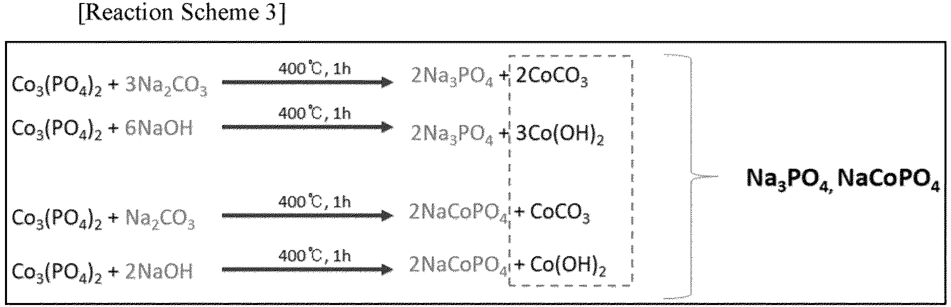

In Reaction Scheme 3, when the reaction time is somewhat insufficient, Co₃O₄ may not be sufficiently synthesized, and some of the Co in the coating layer may be oxidized and synthesized as a mixture of CoCO₃/Co(OH)₂, but may be present at the level of impurities.

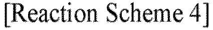

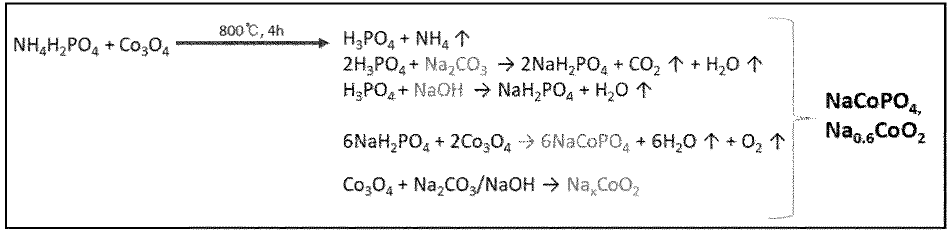

In Reaction Scheme 4, when the sintering process is performed at a somewhat high reaction temperature, Co₃O₄ among the reaction products may be synthesized into Na-Metal Oxide, and NH₄H₂PO₄ and the Co source may react to synthesize NaCOPO₄.

Meanwhile, a process of washing the positive electrode active material (layered oxide) on which the coating layer prepared in the sintering process is formed with water may be further included.

The water washing process is a process for removing unreacted materials, impurities, and residual sodium, and may be performed at a temperature of 1 to 80 °C or 5 to 50 °C and a stirring speed of 200 to 500 rpm, 200 to 400 rpm, or 300 to 400 rpm, for 0.5 to 5 hours, 0.5 to 4 hours, 0.5 to 3 hours or 0.5 to 1.5 hours after introducing the positive electrode active material with the coating layer prepared in the sintering process into a reactor including at least one selected from deionized water, distilled water, and ethanol.

In the present invention, as structural stability is improved by forming a coating layer on the O3-type layered oxide, residual Na on the surface may be effectively removed without the problem of crystal structure collapsing when the existing O3-type layered oxide is washed with water.

Subsequently, a drying process may be performed to remove moisture from the positive electrode active material including moisture through the water washing process, and the drying process may be drying under vacuum conditions and a temperature of 100 to 300 °C for 12 hours or more.

Still another embodiment of the present invention provides a positive electrode for a sodium secondary battery, including the positive electrode active material, and a sodium secondary battery.

The positive electrode includes a positive electrode current collector and a positive electrode active material layer located on the positive electrode current collector, and the positive electrode active material according to one aspect of the present invention is present in the positive electrode active material layer.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may typically have a thickness of 3 to 500 µm, and fine irregularities may be formed on the surface of the current collector, thereby increasing the adhesion of the positive electrode active material. For example, the positive electrode current collector may be provided in various forms such as a film, a sheet, a foil, a net, a porous body, a foam, a nonwoven body, etc.

In addition, the positive electrode active material layer may be a layer including the above-described positive electrode active material along with a conductive material and a binder.

Here, the conductive material is used to provide conductivity to the electrode, and may be used without particular limitation as long as it has conductivity without causing chemical changes in the positive electrode active material. Non-limiting examples of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative. The conductive material may be typically included in an amount of 1% to 30 wt% based on the total weight of the positive electrode active material layer.

In addition, the binder is a material that serves to improve the adhesion between positive electrode active material particles and the adhesion between the positive electrode active material and the current collector. Non-limiting examples of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof. The binder may be typically included in an amount of 1% to 30 wt% based on the total weight of the positive electrode active material layer.

The positive electrode according to one embodiment of the present invention may be manufactured according to a conventional method of manufacturing a positive electrode for a sodium secondary battery, except for using the positive electrode active material described above. For example, a positive electrode may be manufactured by applying a slurry for forming a positive electrode active material layer including a positive electrode active material and, optionally, a binder and a conductive material onto a positive electrode current collector, and then drying and rolling it. According to another example, the positive electrode may be manufactured by casting the slurry for forming the positive electrode active material layer onto a separate support and then laminating the film obtained by peeling the positive electrode active material layer from the support onto the positive electrode current collector.

Yet another aspect of the present invention provides an electrochemical device including the above-described positive electrode. Here, the electrochemical device may be, specifically, a battery, a capacitor, and more specifically, a sodium secondary battery.

A sodium secondary battery includes a positive electrode, a negative electrode located opposite the positive electrode, a separator interposed between the positive electrode and the negative electrode, and an electrolyte. In addition, the sodium secondary battery may include a battery container (case) that accommodates an electrode assembly including the positive electrode, the negative electrode, and the separator, and a sealing member that seals the battery container.

At this time, depending on the shape of the battery container (case), the sodium secondary battery may be classified as a can-type sodium secondary battery in which the electrode assembly is built into a metal can and a pouch-type sodium secondary battery in which the electrode assembly is built into a pouch made of a sheet such as an aluminum laminate.

In particular, in the case of a pouch-type sodium secondary battery using a positive electrode including a positive electrode active material according to various embodiments of the present invention, as the possibility of side reactions between the positive electrode active material and the electrolyte is low, there is an advantage in that it is possible to improve stability during storage and/or operation and at the same time reduce gas generation.

Hereinafter, the present invention will be described in detail through examples, but these are intended to illustrate the present invention in more detail, and the scope of the present invention is not limited to the following examples.

### Examples

### (Example 1-1)

A Na_{1.0}Ni_{0.33}Fe_{0.33}Mn_{0.33}O₂ (NFM111) O3-type layered oxide and 1 wt% of a coating source, Co₃(PO₄)₂, were dry mixed using a hand mixer.

The prepared mixture was input to an alumina crucible, sintered at 400 °C for 4 hours in an air atmosphere, and then cooled to room temperature to prepare a positive electrode active material with a coating layer.

30 g of 85 wt% of the prepared positive electrode active material, 10 wt% of carbon black, and 5 wt% of a PVdF binder were dispersed in N-methyl-2 pyrrolidone (NMP) to prepare a positive electrode slurry. The positive electrode slurry was uniformly applied on an aluminum thin film having a thickness of 15 µm and vacuum dried at 135 °C to manufacture a positive electrode for a sodium secondary battery.

A sodium secondary battery (coin cell) was manufactured using a sodium metal plate as a counter electrode to the positive electrode, porous glass fiber (thickness: 200 µm) as a separator, and an electrolyte in which NaPF₆ was present at a concentration of 1.0 M in a solvent in which propylene carbonate and fluoroethylene carbonate were mixed in a volume ratio of 98:2.

### (Examples 1-2 to 2-3 and Comparative Examples 1-1 to 3-3)

A positive electrode active material with a coating layer and a sodium secondary battery were manufactured in the same manner as in Example 1-1, except that the coating source and sintering conditions were as shown in Table 1 below.

### Experimental Examples

### Experimental Example 1: Analysis of compounds contained in coating layer

The content of the coating material (i.e., second compound) on the surface of the positive electrode active materials prepared according to Examples 1-1 to 2-3 and Comparative Examples 1-1 to 3-3 was quantitatively analyzed using a method of screening the compounds described in Tables 1, 2, and 3 below from XRD raw data measured using Bruker's EVA program.

The analysis results of the coating material on the surface of the positive electrode active material analyzed according to the above method are shown in Tables 1 to 3 below.

**[Table 1]**

| | Coating source | Coating concentration (wt%) | Coating temperature (°C) | Coating time (h) | Compounds contained in coating layer |
|---|---|---|---|---|---|
| Example 1-1 | Co₃(PO₄)₂ | 1.0 | 400 | 4 | Na₃PO₄ |
| Example 1-2 | | 3.0 | | | Co₃O₄ |
| Example 1-3 | | 5.0 | | | NaCoPO₄ |
| Example 2-1 | Co₃(PO₄)₂ | 5.0 | 400 | 10 | Na₃PO₄ |
| | | | | | Co₃O₄ |
| Example 2-2 | | 5.0 | 400 | 1 | Na₃PO₄ |
| | | | | | NaCoPO₄ |
| Example 2-3 | NH₄H₂PO₄ | 5.0 | 800 | 4 | Na_{0.6}CoO₂ |
| | Co₃O₄ | | | | NaCoPO₄ |
| Comparative Example 1-1 | NH₄H₂PO₄ | 1.0 | 400 | 4 | Na₃PO₄ |
| Comparative Example 1-2 | | 3.0 | | | |
| Comparative Example 1-3 | | 5.0 | | | |
| Comparative Example 2-1 | Co₃O₄ | 1.0 | 800 | 4 | Na_{0.6}CoO₂ |
| Comparative Example 2-2 | | 3.0 | | | |
| Comparative Example 2-3 | | 5.0 | | | |
| Comparative Example 3-1 | | 1.0 | 600 | 1 | NaCoPO₄ |
| Comparative Example 3-2 | NH₄H₂PO₄ | 3.0 | | | |
| | Co₃O₄ | | | | |
| Comparative Example 3-3 | | 5.0 | | | |

**[Table 2]**

| Classification | Space group | Crystal structure |
|---|---|---|
| Na₃PO₄ | P421c | Tetragonal |
| Co₃O₄ | Fd-3m | Cubic |
| Na_{0.6}CoO₂ | P63/mmc | Hexagonal |
| NaCoPO₄ | Pnma | Orthorhombic |

Referring to Table 1, it was confirmed that the coating layer of the positive electrode active material prepared in Example 1 of the present invention included three compounds, Na₃PO₄, Co₃O₄, and NaCoPO₄, and the coating layer in Example 2 included two compounds. On the other hand, in Comparative Examples, it was confirmed that the coating layer included one compound among Na₃PO₄, Co₃O₄, and NaCoPO₄.

Referring to Table 2, the three compounds contained in the coating layer prepared in Examples were analyzed as having space groups P421c, Fd-3m, or Pnma and tetragonal, cubic or orthorhombic crystal structures.

Na₃PO₄ (space group P421c, tetragonal crystal structure) has the advantage of improving the initial charge capacity by increasing the ionic conductivity of the coating layer, but it was analyzed that as the thickness of the coating layer increases, the coating layer is formed unevenly, which increases resistance, reduces discharge capacity, and is ineffective in improving lifespan.

Co₃O₄ (space group Fd-3m, cubic crystal structure) or Na_{0.6}CoO₂ (space group P63/mmc, hexagonal crystal structure) forms an irreversible coating layer (Co₃O₄), and has the problem of reducing the initial discharge capacity due to the very low expressed capacity (Na_{0.6}CoO₂), but it was analyzed that the surface coating layer of the positive electrode active material reduces side reactions with the electrolyte and slightly improves lifespan.

NaCoPO₄ (space group Pnma, orthorhombic crystal structure) has the problem of increasing the concentration of the coating layer, increasing resistance, and decreasing discharge capacity, but it is analyzed that it slightly improves lifespan.

**[Table 3]**

| (wt%) | O3-NNFMO | Na₃PO₄ | Co₃O₄ | NaCoPO₄ | Na_{0.6}CoO₂ |
|---|---|---|---|---|---|
| Example 1-1 | 98.5 | 1.2 | 0.08 | 0.23 | - |
| Example 1-2 | 96.5 | 2.8 | 0.18 | 0.53 | - |
| Example 1-3 | 94.4 | 3.9 | 0.55 | 1.10 | - |
| Comparative Example 1-1 | 94.5 | 4.4 | 1.10 | - | - |
| Comparative Example 1-2 | 94.5 | 2.9 | - | 2.6 | - |
| Comparative Example 1-3 | 95.4 | - | - | 1.8 | 2.8 |
| Comparative Example 2-1 | 97.6 | 2.4 | - | - | - |
| Comparative Example 2-2 | 96.1 | 3.9 | - | - | - |
| Comparative Example 2-3 | 94.4 | 5.6 | - | - | - |
| Comparative Example 3-1 | 98.8 | - | - | - | 1.2 |
| Comparative Example 3-2 | 96.2 | - | - | - | 3.8 |
| Comparative Example 3-3 | 93.9 | - | - | - | 6.1 |

Referring to Table 3, the optimal content composition of Na₃PO₄, Co₃O₄, and NaCoPO₄ compounds in the coating layer was confirmed in Examples 1-1 to 1-3.

In addition, in the Examples, it was analyzed that battery characteristics improved as the coating layer content increased in the range of 1.5 to 5.5 wt%.

### Experimental Example 3: Coating uniformity analysis through field emission scanning electron microscopy (FE-SEM) analysis and BET analysis

FIGS. 1A to 1E are FE-SEM images of the surface of the positive electrode active material particles formed with a coating layer and prepared in Examples 1-1 to 2-3 and Comparative Examples 1-1 to 3-3, respectively.

Table 4 below shows the BET specific surface areas of the positive electrode active material formed with a coating layer and prepared in Examples 1-1 to 1-3 and Comparative Examples 1-1 to 3-3.

**[Table 4]**

| | BET specific surface area (m²/g) |
|---|---|
| Pristine | 0.64 |
| Example 1-1 | 0.61 |
| Example 1-2 | 0.59 |
| Example 1-3 | 0.55 |
| Example 2-1 | 0.60 |
| Example 2-2 | 0.54 |
| Example 2-3 | 0.50 |
| Comparative Example 1-3 | 0.87 |
| Comparative Example 2-3 | 2.54 |
| Comparative Example 3-3 | 0.92 |

Referring to FIGS. 1A to 1E and Table 4, it was confirmed that in Examples 1-1 to 2-3, even though the thickness of the coating layer increases as the proportion of the coating source increases (1 wt%→5 wt%), a relatively uniform and smooth coating layer is formed on the particle surface. The same results were confirmed in the BET specific surface area analysis. These results are analyzed to be due to the inclusion of two or three compounds of Na₃PO₄, Co₃O₄, and NaCoPO₄ in the coating layer.

On the other hand, in Comparative Examples, it was confirmed that a large number of nanoparticle compounds with a size of 10 to 100 nm were deposited on the surface of the layered oxide particles, including one compound of Na₃PO₄, Co₃O₄, or NaCoPO₄, and a non-uniform coating layer was formed. The same results were confirmed in the BET specific surface area analysis. As a result, as the thickness of the coating layer increases, coating uniformity deteriorates, which is expected to increase resistance and result in deterioration of discharge capacity and lifespan characteristics.

### Experimental Example 4: Measurement of residual Na content (TTS)

The residual Na content on the surface of the positive electrode active material formed with a coating layer and prepared in Examples 1-1 to 2-3 and Comparative Examples 1-1 to 3-3 was measured, and the results are shown in Table 5 below.

The content of residual sodium was measured for each compound (for example, NaOH or Na₂CO₃) including residual Na using a potentiometric neutralization titration method, and then the total amount of only Na was calculated separately to obtain the value (TTS, total sodium). The calculation method is as shown in Calculation Formula 1 below. TTS (total Na) = NaOH analysis value (%) × Na/NaOH + Na2CO3 analysis value (%) × 2Na/Na2CO3

**[Table 5]**

| | NaOH | Na₂CO₃ | Total Na (ppm) |
|---|---|---|---|
| Pristine | 1,441 | 32,250 | 14,819 |
| Example 1-1 | 1,266 | 14,262 | 6,915 |
| Example 1-2 | 635 | 14,305 | 6,571 |
| Example 1-3 | 1,275 | 11,823 | 5,862 |
| Example 2-1 | 1,758 | 20,323 | 9,827 |
| Example 2-2 | 1,772 | 15,367 | 7,685 |
| Example 2-3 | 630 | 15,852 | 7,239 |
| Comparative Example 1-1 | 1,753 | 21,954 | 10,531 |
| Comparative Example 1-2 | 2,086 | 19,564 | 9,686 |
| Comparative Example 1-3 | 812 | 18,933 | 8,680 |
| Comparative Example 2-1 | 639 | 23,724 | 10,659 |
| Comparative Example 2-2 | 1,447 | 23,000 | 10,809 |
| Comparative Example 2-3 | 3,043 | 22,067 | 11,322 |
| Comparative Example 3-1 | 1,756 | 21,997 | 10,552 |
| Comparative Example 3-2 | 1,293 | 30,843 | 14,124 |
| Comparative Example 3-3 | 482 | 36,581 | 16,146 |

Referring to Table 5, it was confirmed that in the Examples, the residual Na content (TTS) was reduced to 10,000 ppm or less compared to the Comparative Examples, and preferably, in Examples 1-1 to 1-3, the residual Na content was reduced to 7,000 ppm or less.

### Experimental Example 5: Electrochemical performance evaluation of sodium secondary battery

For the sodium secondary batteries manufactured in Examples 1-1 to 2-3 and Comparative Examples 1-1 to 3-3, the initial charge capacity (CH), initial discharge capacity (DCH), initial efficiency (ICE), and the ratio of discharge capacity at the 50th cycle to the initial capacity (cycle capacity retention) were measured, and the results are shown in Table 6 below.

**[Table 6]**

| | 1 cycle | | | 50 cycles |
|---|---|---|---|---|
| | 25 °C, 0.1 C, 2.2-4.4 V | | | 25 °C, 0.5C/0.5C, 2.2-4.4 V |
| | CH (mAh/g) | DCH (mAh/g) | ICE (%) | Retention (%) |
| Pristine | 207.7 | 187.7 | 90.4 | 64.6 |
| Example 1-1 | 210.0 | 185.6 | 88.4 | 77.2 |
| Example 1-2 | 208.1 | 183.0 | 87.9 | 81.0 |
| Example 1-3 | 206.1 | 182.6 | 88.6 | 85.0 |
| Example 2-1 | 205.9 | 181.7 | 88.2 | 77.9 |
| Example 2-2 | 206.3 | 182.4 | 88.4 | 75.2 |
| Example 2-3 | 206.5 | 183.1 | 88.7 | 75.0 |
| Comparative Example 1-1 | 217.2 | 183.4 | 84.4 | 57.8 |
| Comparative Example 1-2 | 217.0 | 183.2 | 84.4 | 60.3 |
| Comparative Example 1-3 | 211.5 | 183.6 | 86.8 | 61.8 |
| Comparative Example 2-1 | 218.7 | 182.9 | 83.6 | 65.1 |
| Comparative Example 2-2 | 202.5 | 181.7 | 89.7 | 67.3 |
| Comparative Example 2-3 | 185.6 | 179.5 | 96.7 | 70.0 |
| Comparative Example 3-1 | 210.4 | 186.1 | 88.5 | 63.1 |
| Comparative Example 3-2 | 205.9 | 181.5 | 88.1 | 66.5 |
| Comparative Example 3-3 | 198.7 | 177.4 | 89.3 | 69.1 |

Referring to Table 6, when all three compounds are included in the coating layer in Examples 1-1 to 1-3, it is analyzed that the capacity, initial efficiency, and lifespan improvement are the best as the resistance of the irreversible coating layer improves due to the increase in Na+ conductivity.

In Examples 2-1 to 2-3, when two compounds are included in the coating layer, it is analyzed that the above-described effects are somewhat reduced.

In Comparative Examples 1-1 to 1-3, when one compound Na₃PO₄ is included in the coating layer, it was analyzed that as the coating layer content (thickness) increases, the coating layer is formed non-uniformly, which increases resistance, reduces discharge capacity, and is ineffective in improving lifespan.

In Comparative Examples 2-1 to 2-3, it was analyzed that when one compound Na_{0.6}CoO₂ is included in the coating layer, the initial discharge capacity and initial efficiency are analyzed to be the lowest as the energy density is reduced due to the low Na equivalent.

In Comparative Examples 3-1 to 3-3, it is analyzed that when one compound NaCoPO₄ is included in the coating layer, the concentration of the coating layer increases, resistance increases, and discharge capacity decreases.

In the present invention, electrolyte side reactions can be suppressed and at the same time, the amount of residual Na can be reduced by the coating layer formed on the surface of the positive electrode active material.

In addition, the present invention can improve the ionic conductivity of the coating layer, improve coating uniformity when the coating layer thickness increases, suppress the increase in resistance due to the coating layer, and reduce side reactions with electrolyte on the particle surface, by including at least two space groups, crystal structures or compounds in the coating layer.

In addition, in the present invention, by preparing the positive electrode active material with the coating layer formed only through a dry process, process costs can be reduced by eliminating the washing-drying process.

As described above, although the present invention has been shown and described with respect to specific embodiments, it will be apparent to those skilled in the art that the present invention can be modified and changed in various ways to the extent that it does not depart from the following claims.

## Claims

1. A positive electrode active material for a sodium secondary battery, comprising:
layered oxide particles containing at least sodium and a transition metal; and
a coating layer located on the layered oxide particles,
wherein the coating layer includes at least two compounds selected from compounds having crystal structures belonging to space groups P421c, Fd-3m, and Pnma, respectively.

2. The positive electrode active material of claim 1, wherein the coating layer includes at least three compounds having crystal structures belonging to P421c, Fd-3m, and Pnma, respectively.

3. The positive electrode active material of claim 1 or 2, wherein the compound having a crystal structure belonging to the space groups P421c, Fd-3m, or Pnma has a tetragonal, cubic, or orthorhombic crystal structure, respectively.

4. The positive electrode active material of one of claims 1 to 3, wherein the coating layer includes at least two selected from the group consisting of sodium phosphate, a transition metal oxide, and a transition metal-containing sodium phosphate.

5. The positive electrode active material of claim 4, wherein the sodium phosphate, the transition metal oxide, and the transition metal-containing sodium phosphate are represented by the following Chemical Formulas 2a, 2b, and 2c, respectively:
[Chemical Formula 2a] NaₓPO_{y}
in Chemical Formula 2a, 0<x<4 and 2<y<5
[Chemical Formula 2b] CoₓO_{y}
in Chemical Formula 2b, 0<x<4 and 0<y<5
[Chemical Formula 2c] NaₓCo_{y}PO₄
in Chemical Formula 2c, 0<x<2 and 0<y<2.

6. The positive electrode active material of claim 4 or 5, wherein the coating layer includes at least Na₃PO₄, Co₃O₄, and NaCoPO₄.

7. The positive electrode active material of one of claims 1 to 6, wherein the total compounds included in the coating layer are included in an amount of more than 0.5 wt% and less than 10 wt% based on the total compounds included in the positive electrode active material.

8. The positive electrode active material of one of claims 1 to 7, wherein the layered oxide is represented by the following Chemical Formula 1:
[Chemical Formula 1] NaₐNiₓTM_{y}M1_{z}Mn_{1-x-y-z}O₂
in Chemical Formula 1,
TM is Co or Fe,
M1 is at least one selected from P, Sr, Ba, Ti, Zr, Al, W, Co, Ce, Hf, Ta, Cr, F, Mg, Cr, V, Fe, Zn, Si, Y, Ga, Sn, Mo, Ge, Nd, B, Nb, Gd, and Cu,
TM and M1 are different elements, and
0.80<a<1.2, 0.01≤x≤0.45, 0.01≤y≤0.45, 0≤z≤0.1, and 0.01≤1-x-y-z≤0.45.

9. The positive electrode active material of one of claims 1 to8, wherein the positive electrode active material has a BET specific surface area of less than 1 m²/g.

10. The positive electrode active material of one of claims 1 to 9, wherein the positive electrode active material has a residual Na content (TTS, total sodium) of less than 10,000 ppm.

11. A method of preparing a positive electrode active material for a sodium secondary battery, comprising:
a process of mixing a layered oxide containing at least sodium and a transition metal; and a coating source containing a transition metal, phosphorus (P), and oxygen (O); and
a process of sintering a mixture of the layered oxide and the coating source.

12. The method of claim 11, wherein in the mixing process, the coating source is mixed in an amount of more than 0.5 wt% and less than 10 wt% based on the entire mixture.

13. The method of claim 11, wherein in the mixing process, the coating source includes at least one selected from Co₃(PO₄)₂, CoPO₄, Co₂PO₄, Co₄PO₄, and NH₄H₂PO₄; and/or
wherein the sintering process is performed at 300 to 550 °C for 2 to 6 hours; and/or
further comprising a process of washing the sintered product produced in the sintering process with water.

14. A positive electrode for a sodium secondary battery, comprising the positive electrode active material of one of claims 1 to13.

15. A sodium secondary battery using the positive electrode of claim 14.
